(19) Europäisches Patentamt
European Patent Office
Office européen des brevets

(11) **EP 0 937 013 B1**

(12) **FASCICULE DE BREVET EUROPEEN**

(45) Date de publication et mention
de la délivrance du brevet:
**13.11.2002 Bulletin 2002/46**

(51) Int Cl.⁷: **C03C 17/36**, C03C 17/22,
C03C 17/34

(21) Numéro de dépôt: **98940291.2**

(22) Date de dépôt: **21.07.1998**

(86) Numéro de dépôt international:
**PCT/FR98/01598**

(87) Numéro de publication internationale:
**WO 99/005072 (04.02.1999 Gazette 1999/05)**

(54) **SUBSTRAT TRANSPARENT REVETU D'AU MOINS UNE COUCHE MINCE**

DURCHSICHTIGES SUBSTRAT BESCHICHTET MIT MINDESTENS EINER DÜNNSCHICHT

TRANSPARENT SUBSTRATE COATED WITH AT LEAST ONE THIN DEPOSIT

(84) Etats contractants désignés:
**AT BE CH DE ES FR GB IE IT LI LU PT SE**

(30) Priorité: **21.07.1997 FR 9709223**

(43) Date de publication de la demande:
**25.08.1999 Bulletin 1999/34**

(73) Titulaire: **SAINT-GOBAIN GLASS FRANCE**
**92400 Courbevoie (FR)**

(72) Inventeurs:
• **GRIMAL, Jean-Michel**
**F-78300 Poissy (FR)**
• **BARRIERES, Frédéric**
**F-93400 Saint-Ouen (FR)**

(74) Mandataire: **Renous Chan, Véronique et al**
**Saint-Gobain Recherche,**
**39, Quai Lucien Lefranc**
**93300 Aubervilliers (FR)**

(56) Documents cités:
**EP-A- 0 536 607          EP-A- 0 622 645**
**EP-A- 0 712 815          DE-U- 29 702 816**
**US-A- 4 528 244**

• **CHEMICAL ABSTRACTS, vol. 114, no. 18, 6 mai 1991 Columbus, Ohio, US; abstract no. 169829k, page 346; XP000193771 & JP 02 233534 A (CENTRAL GLASS COMPANY LTD) 17 septembre 1990**

## Description

L'invention concerne les substrats transparents, notamment en verre, que l'on munit d'au moins une couche mince.

L'application principale de l'invention est la fabrication de vitrages dits fonctionnels utilisés dans le batiment ou pour équiper des véhicules. On comprend ci-après par vitrage "fonctionnel" un vitrage dont au moins un des substrats est revêtu de couches minces, destinées à lui conférer des propriétés particulières, notamment thermiques, électriques, optiques ou même mécaniques, comme une propriété anti-rayure par exemple.

Les couches minces intéressant le plus l'invention sont elles destinées à conférer des propriétés thermiques, c'est à dire celles pouvant agir, notamment, par réflexion du rayonnement solaire et/ou l'infrarouge de grande largeur d'onde.

Il est ainsi connu des couches dites bas-émissives notamment des couches d'argent de faible épaisseur, ou des couches d'oxyde métallique dopé du type $SNO_2$:F ou ITO, des couches filtrantes à fonction de protection vis-à-vis du soleil, par exemple à base de couches métalliques du type alliage nickel-chrome, de couches d'argent plus épaisses ou des couches de nitrure métallique du type TiN.

Les empilements peuvent prévoir une ou plusieurs de ces couches que l'on désignera par la suite sous le terme de couches fonctionnelles. Ces couches sont usuellement associées à d'autres couches pour former un empilement, ceci pour diverses raisons.

Ainsi, il est usuellement prévu de les associer à au moins un revêtement en matériau diélectrique, revêtement (s) qui se trouve(nt) au-dessus de la couche fonctionnelle et/ou intercalés entre substrat porteur et couche fonctionnelle. Une première raison est d'ordre optique : ces revêtements, choisis d'indice de réfraction et d'épaisseur appropriés peuvent permettre d'ajuster l'aspect visuel du vitrage, notamment en reflexion, de manière interférentielle. En outre, au dessus de la couche fonctionnelle, ils peuvent jouer aussi un rôle de protection vis-à-vis des agressions chimiques ou mécaniques. On peut aussi citer les brevets EP-544 577, EP-573 325, EP-648 196 décrivant des empilements utilisant une couche fonctionnelle de type $SnO_2$:F associée à une autre couche de diélectrique du type $SiO_2$, SiOC, SiON, les brevets EP-638 528, EP-745 569, EP-678 484 décrivant les empilements utilisant une ou plusieurs couches d'argent, en alternance avec une (des) couche(s) de diélectrique du type oxyde, métallique, ou le brevet EP-650 938 utilisant une couche à base de TiN associée à deux couches en oxyde ou le brevet EP-511 901 utilisant une couche du type nickel-chrome nitrurée entre deux oxydes métalliques particuliers.

Plus récemment, on a aussi cherché à conférer à ces couches en matériau diélectrique une fonction de protection des couches fonctionnelles lors de traitements thermiques à haute température, de leurs substrats verriers, du type bombage/trempe. Les matériaux à base de nitrure de silicium se sont imposés comme très intéressants, notamment à ce point de vue : optiquement, ils ont un indice de réfraction proche de 2 et donc voisin de ceux de la plupart des oxydes métalliques habituellement utilisés en tant que couche de diélectrique du type $SnO_2$ par exemple. Mais en plus, ils font office de barrière à l'oxygène de l'atmosphère vis-à-vis de la couche fonctionnelle, les préservant ainsi de toute détérioration de type oxydation à haute température. Ils sont en outre « inertes » vis à vis de l'oxygène à haute température, en ce sens que leurs propriétés, notamment optiques, restent inchangées après un traitement thermique du type bombage/trempe. Ainsi, on peut concevoir des empilements où la couche fonctionnelle est surmontée d'une couche de $Si_3N_4$, éventuellement associée à d'autres couches, avec des propriétés thermiques, optiques qui restent identiques après bombage/trempe : c'est l'enseignement, notamment, du brevet EP-O 718 250, qui décrit des empilements du type verre/couche(s) d'oxyde/argent/métal/couche(s) d'oxyde/$Si_3N_4$, la couche la plus extérieure étant en $Si_3N_4$.

Cependant, il s'est avéré que même avec ce type d'empilement, le rendement industriel n'était pas optimal, en ce sens qu'un nombre encore trop élevé de substrats revêtus devait, une fois avoir subi le bombage ou la trempe, être mis au rebut du fait de l'apparition de défauts optiques visibles à l'oeil nu du type piqûres.

L'invention a donc pour but de pallier cet inconvénient, notamment en proposant un nouveau type d'empilement à couche(s) fonctionnnelle(s) qui soit apte à subir des traitements thermiques en présentant une qualité optique meilleure, ou tout au moins plus reproductible et plus maîtrisée.

L'invention a pour objet un substrat transparent du type substrat verrier revêtu d'une couche mince à base de nitrure, carbonitrure, oxynitrure et/ou oxycarbonitrure de silicium (ci-après désigné sous le terme de "couche de nitrure de silicium"), ou d'un empilement de couches minces dont la dernière est cette couche en nitrure de silicium. En vue de prévenir la détérioration de cette couche lors de traitements thermiques du type bombage ou trempe, notamment au contact d'une atmosphère contenant des espèces corrosives du type $Na_2O$ et éventuellement des chlorures ou sulfures, celle -ci est surmontée d'une couche protectrice vis-à-vis de ce type de corrosion à haute température et éventuellement en outre " dopée " par introduction dans sa composition d'au moins un métal, (le terme " dopée " n'est pas ici à prendre dans son sens connu dans l'électronique, il veut plutôt indiquer que la couche de nitrure voit ses propriétés, tout particulièrement de résistance à la corrosion à haute température, accrues par la présence de cet (ces) additifs métallique(s).

En fait, il s'est avéré que la couche de nitrure de silicium remplissait parfaitement son rôle de protection vis-à-vis de l'oxydation à haute température des couches sous-jacentes. Mais en revanche, elle pouvait, dans certaines conditions rencontrées dans les traitements thermiques du type trempe, mais surtout du type bombage, être susceptible de détérioration non pas par attaque oxydante mais plutôt par attaque d'espèces chimiques " agressives " à haute température présentes dans l'atmosphère où s'effectue le bombage et/ou "migrant " du second substrat verrier dans le cas où le bombage de plusieurs de ces substrats de verre est effectué simultanément, les substrats se trouvant superposés sur un moule annulaire avec l'empilement de couches de l'un des substrats en contact avec l'autre substrat verrier. On a identifié au moins un type de ces espèces : ce sont tous les composés d'alcalins du type sodium, notamment des vapeurs de $Na_2O$. Cette sensibilité à haute température se traduisait jusque-là par les piqûres évoquées précédemment, attaques superficielles du nitrure de silicium se propageant dans le reste de l'empilement.

L'invention a donc consisté à conserver le nitrure de silicium pour ses propriétés très intéressantes de barrière à l'oxygène, mais d'améliorer sa durabilité à haute température par deux moyens cumulatifs ou alternatifs :

➡ selon la première variante, on le " gaine " d'une couche protectrice, qui, elle, n'est pas destinée à faire barrage à l'oxygène mais qui va faire barrage aux espèces corrosives du type $Na_2O$, en faisant une barrière parfaitement étanche, soit en étant inerte chimiquement vis-à-vis de ces espèces corrosives, soit en présentant une bonne affinité avec celles-ci de manière à les filtrer en les absorbant,

➡ selon une seconde variante venant éventuellement s'ajouter à la première, on modifie chimiquement le nitrure pour le rendre plus résistant, sans cependant lui faire perdre ses propriétés de barrière à l'oxygène.

Cette solution très efficace permet de diminuer très significativement le taux de rebut lors du bombage du substrat verrier, en limitant considérablement l'apparition des défauts optiques observés jusque là. Or cette solution est tout à fait inattendue, en ce sens qu'on considère habituellement le nitrure de silicium comme un matériau assez durable sur le plan mécanique, et plutôt inerte chimiquement. On aurait pu s'attendre à ce que les défauts optiques détectés dans l'empilement aient pour origine des couches ne présentant pas un tel niveau de durabilité et sous-jacentes à la couche de nitrure de silicium, par exemple les couches fonctionnelles ou la première couche de l'empilement, celle en contact direct avec du verre. Les inventeurs ont donc montré qu'au contraire, c'est par la dernière couche de nitrure que se propageait la corrosion.

L'invention permet un compromis : garder le nitrure de silicium malgré cette faiblesse mise en évidence, en l'améliorant.

Selon la première variante, on protège donc le nitrure de silicium par une surcouche.

Celle-ci, dans un premier mode de réalisation, est disposée sur la couche de nitrure de silicium (de préférence directement, mais éventuellement par l'intermédiaire d'au moins une autre couche du type matériau diélectrique) soit sous forme métallique, soit sous forme d'un oxyde métallique sous-stoechiométrique en oxygène. Cette couche est destinée à s'oxyder totalement lors du traitement thermique. Lors du dépôt, avant traitement, elle a de préférence une épaisseur géométrique d'au plus 10 nm, notamment comprise entre 1 et 5 nm. Effectivement, il va y avoir oxydation donc une modification des propriétés optiques de l'empilement après traitement thermique, se traduisant essentiellement par une augmentation de la transmission lumineuse. Cependant, ces modifications ne sont pas extrêmement importantes, car la couche protectrice est cantonnée de préférence dans des épaisseurs très minces, bien que suffisantes pour assurer sa fonction. Elles sont de toute façon parfaitement maîtrisées, puisque les caractéristiques de la couche protectrice sont choisies afin qu'elle s'oxyde totalement lors du traitement thermique.

Selon le second mode de réalisation de cette première variante, on dépose la couche protectrice au-dessus de la couche de nitrure de silicium (directement ou non, comme dans le mode de réalisation précédent), sous forme d'un oxyde, oxycarbure et/ou oxynitrure métallique, notamment sur une épaisseur géométrique d'au plus 20 nm, notamment comprise entre 2 nm et 10 nm. Selon ce second mode, on n'observe aucune modification dans les propriétés, notamment optiques, de l'empilement après traitement thermique.

La couche protectrice, qu'elle subisse ou non une oxydation lors du traitement thermique, comprend au moins un métal dont l'oxyde est apte à faire barrage/absorber/filtrer les espèces corrosives à haute température autres que l'oxygène, notamment du type $Na_2O$. Ce métal est de préférence choisi parmi le niobium Nb, l'étain Sn, le tantale Ta, le titane Ti ou le zirconium Zr. Le niobium est particulièrement avantageux, son oxyde présentant une affinité élevée avec les alcalins du type sodium.

Selon la seconde variante de l'invention, venant éventuellement s'ajouter à la première, la couche de nitrure de silicium est " dopée " en introduisant jusqu'à 25% en poids, notamment entre 3 et 12% en poids, d'au moins un métal. Ce métal est de préférence l'aluminium. La couche à base de nitrure de silicium peut avantageusement faire partie d'un empilement de couches minces, et notamment se trouver dans l'empilement au-dessus d'une couche fonctionnelle à propriétés thermiques, directement ou par l'intermédiaire d'au moins une autre couche mince en matériau diélectrique ou en métal. Cette couche fonctionnelle peut notamment être filtrante, de protection solaire, sélective, bas-émissive et/ou à propriétés de conduction électrique.

L'empilement peut comprendre une ou plusieurs couches fonctionnelles, de même nature ou non, par exemple deux ou trois couches fonctionnelles.

La couche fonctionnelle peut être de type métallique, notamment à base d'argent, d'or, d'aluminium, de nickel, de chrome, éventuellement nitrure, d'acier inoxydable. Il peut y avoir non pas une unique couche fonctionnelle, mais au moins deux séparées par au moins un revêtement diélectrique.

Ces couches fonctionnelles, leurs épaisseurs, leurs performances optiques, sont notamment décrites dans les brevets précités. On cite plus particulièrement le brevet pré-mentionné EP-0 718 250 qui utilise une ou plusieurs couches d'argent dans un empilement s'achevant par une couche de nitrure de silicium justement pour conférer à celui-ci un caractère « bombable », « trempable ». On peut citer aussi plus particulièrement la demande de brevet EP-0 847 965 qui propose des empilements du type à deux couches d'argent étudiés en vue d'améliorer leur caractère bombable ou trempable, et ayant également recours à au moins une couche de nitrure de silicium : l'invention peut permettre d'améliorer encore la qualité des empilements décrits dans ces deux brevets.

On a ainsi des empilements qui, schématiquement sont du type : couche d'argent disposée d'une part entre un revêtement diélectrique « intérieur » (côté substrat porteur) et d'autre part un revêtement diélectrique « extérieur » de préférence par l'intermédiaire d'une fine couche de métal, ledit revêtement diélectrique « extérieur » comprenant la couche de nitrure de silicium améliorée selon l'invention. En cas d'un empilement à deux couches d'argent alternées avec trois revêtements diélectriques, au moins le plus « extérieur » par rapport au substrat porteur s'achève par la couche de nitrure de silicium améliorée selon l'invention.

La couche fonctionnelle peut également être de type nitrure métallique, notamment à base de TiN, CrN, NbN, ZrN.

La couche fonctionnelle peut également être de type oxyde métallique dopé, tel que l'ITO, $SnO_2$:F, ZnO:In. ZnO:F, ZnO:Al, ZnO:Sn.

L'invention concerne plutôt des couches minces déposées par des techniques utilisant le vide, notamment la technique de pulvérisation cathodique éventuellement assistée par champ magnétique. C'est une technique bien maîtrisée pour déposer des couches de métal, d'oxyde métallique ou de nitrure métallique ou de silicium. Dans ce dernier cas, on utilise des cibles de métal ou de silicium dans des atmosphères réactives appropriées avec des gaz de type $O_2$ ou $N_2$. L'invention concerne aussi des couches minces déposées par d'autres techniques, notamment celles du type pyrolyse directement sur le ruban de verre float, pyrolyse de poudre ou CVD (Chemical Vapor Déposition) aptes au dépôt de couches d'oxyde métallique éventuellement dopé, des couches de nitrure métallique, comme décrit dans les brevets EP-638 527 et EP-650 938, et des couches à base de nitrure de silicium éventuellement comprenant aussi de l'oxygène et/ou du carbone, comme décrit dans la demande de brevet FR97/01468 du 10 février 1997.

L'invention concerne également des empilements de couches minces dont certaines, par exemple les premières, peuvent être déposées par pyrolyse, et d'autres, notamment les suivantes, par une technique sous vide, en reprise.

L'invention a également pour objet l'application du substrat revêtu selon l'invention à la fabrication de vitrages exploitant les propriétés électriques de la ou des couches fonctionnelles de l'empilement, en tant que vitrages chauffants ; ainsi que son application à la fabrication de vitrages à propriétés thermiques évoquées précédemment, vitrages qui soient en outre bombables/trempables.

L'invention concerne l'utilisation de ces vitrages aussi bien dans le bâtiment que pour équiper des véhicules de type automobile, en structure « monolithique» (un seul substrat rigide), feuilleté à deux substrats rigides verriers, ou feuilleté asymétrique (un substrat verrier associé à au moins une feuille de polymère absorbant l'énergie mécanique et une feuille de polymère dite du type auto-cicatrisante, généralement toutes deux à base de polyuréthane comme décrit par exemple dans le brevet EP-673 757). On peut citer notamment les pare-brise et vitrages latéraux de véhicules.

L'invention est avantageuse quelle que soit la technique de bombage ou bombage/trempe envisagée. On peut citer, de manière non exhaustive :

➡ la technique de bombage de substrats verriers défilant sur un lit de conformation à profil courbe, constitué notamment de rouleaux droits ou cintrés tournants, telle que décrite dans les brevets EP-133 114, EP-263 030, EP-474 531, EP-593 363,

➡ la technique de bombage par gravité d'un substrat ou de deux substrats verriers superposés, en position horizontale sur des formes de bombage périphériques montées sur des chariots mobiles dans un four de réchauffage, comme décrite dans les brevets EP-317 409, EP-465 308, EP-640 569, WO-97/23420, particulièrement adaptée à la fabrication de vitrages feuilletés,

➡ la technique de bombage faisant intervenir une étape de pressage et/ou d'aspiration contre une forme de bombage pleine supérieure, associée à une forme de bombage annulaire inférieure, comme décrite dans les brevets EP-324 690, EP-438 342, EP-665 822, EP-459 898, EP-578 542, EP-660 809.

Ces bombages peuvent être complétés ou substitués par une trempe, notamment une trempe thermique. Dans tous les cas, cela impose un réchauffement des verres jusqu'à au moins 500°C et en général de l'ordre de 550 à 620°C, températures exacerbant l'effet corrosif de certaines vapeurs du type $Na_2O$, observations d'où l'invention est partie.

L'invention sera décrite en détail ci-après à l'aide d'exemples non limitatifs illustrés par des figures :

- **figure 1** : un substrat verrier revêtu d'un empilement de couches minces à une couche d'argent,
- **figures 2 et 3** : un substrat verrier revêtu d'un empilement de couches minces à deux couches d'argent,
- **figure 4 :** un vitrage feuilleté incorporant le substrat selon l'une des figures 1, 2 ou 3 une fois bombé.

Ces figures sont extrêmement schématiques, et ne respectent pas les porportions dans les épaisseurs entre les différents matériaux représentés pour en faciliter la lecture.

## EXEMPLE 1

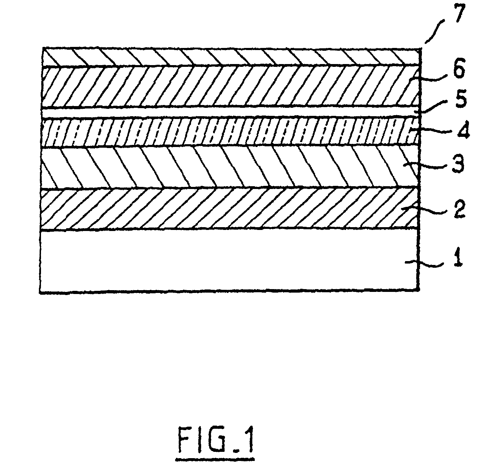

Celui-ci se rapporte à un substrat verrier 1 représenté en coupe à la figure 1, substrat en verre silico-sodo-calcique flotté de 2 mm d'épaisseur, plan, sur lequel on a déposé un empilement du type de celui décrit dans le brevet EP-0 718 250, amélioré selon l'invention, à savoir l'empilement:

$$\text{verre}^{(1)}/Si_3N_4{}^{(2)}/ZnO^{(3)}/Ag^{(4)}/Nb^{(5)}/Si_3N_4{}^{(6)}/Nb^{(7)}$$

Tous les dépôts se font par pulvérisation cathodique.

L'installation de dépôt comprend au moins une chambre de pulvérisation munie de cathodes équipées de cibles en matériaux appropriés sous lesquelles le substrat 1 passe successivement. Les conditions de dépôt pour chacune des couches préconisées pour cet exemple sont :

- ➡ la couche 4 en argent est déposée à l'aide d'une cible en argent dans une atmosphère d'argon,
- ➡ les couches 2 et 6 à base de nitrure de silicium sont déposées à l'aide d'une cible en silicium dopé à 1% de bore par pulvérisation réactive dans une atmosphère d'azote,
- ➡ la couche 3 en ZnO est déposée à l'aide d'une cible en zinc par pulvérisation réactive dans une atmosphère argon/oxygène dont environ 40% volumique d'oxygène,
- ➡ la couche 5 de protection de la couche d'argent en Nb est déposée à l'aide d'une cible en Nb par pulvérisation en atmosphère inerte d'argon,
- ➡ la couche 7 selon l'invention destinée à protéger la couche sous-jacente de $Si_3N_4$ référencée 6 est déposée dans les mêmes conditions que la couche 5 en Nb.

Les densités de puissance et les vitesses de défilement du substrat sont ajustées de manière connue pour obtenir les épaisseurs de couches voulues.

Le tableau 1 ci-dessous indique la nature des couches et leurs épaisseurs en nanomètres, de l'empilement de l'exemple 1 :

## TABLEAU 1

| | EXEMPLE 1 |
|---|---|
| $Si_3N_4$ (2) | 20 |
| ZnO (3) | 20 |
| Ag (4) | 10 |
| Nb (5) | 1 |
| $Si_3N_4$ (6) | 40 |
| Nb (7) | 2 |

**EXEMPLE 2**

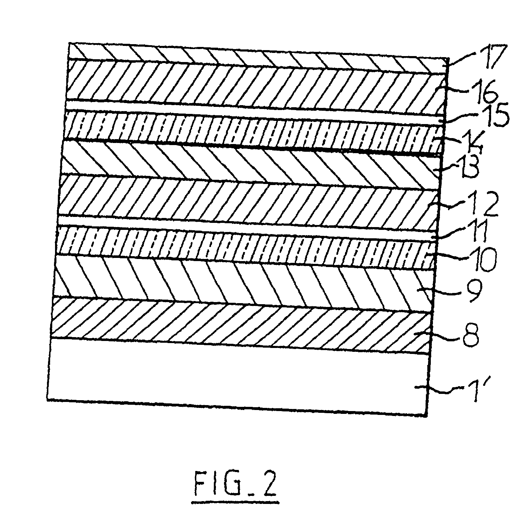

Celui-ci se rapporte à un substrat verrier 1' représenté en coupe à la figure 2, substrat identique au substrat 1 précédent, sur lequel on a déposé un empilement à deux couches d'argent qui peut être du type de ceux décrits dans le brevet EP-0 847 965 cité précédemment et amélioré selon l'invention, à savoir l'empilement :

$$Verre^{(1')}/SnO_2^{(8)}/ZnO^{(9)}/Ag^{(10)}/Nb^{(11)}/Si_3N_4^{(12)}/ZnO^{(13)}/Ag^{(14)}/Nb^{(15)}/Si_3N_4^{(16)}/Nb^{(17)}$$

Les couches sont déposées dans les mêmes conditions qu'à l'exemple 1. Ici, la couche (8) en $SnO_2$ est déposée à partir d'une cible d'étain par pulvérisation en atmosphère réactive contenant de l'oxygène.

Le tableau 2 ci-dessous indique la nature des couches et leurs épaisseurs en nanomètres:

### TABLEAU 2

|  | EXEMPLE 2 |
|---|---|
| verre (1') | - |
| $SnO_2$ (8) | 20 |
| ZnO (9) | 17 |
| Ag (10) | 9 |
| Nb (11) | 0,7 |
| $Si_3N_4$ (12) | 65 |
| ZnO (13) | 25 |
| Ag (14) | 9 |
| Nb (15) | 0,7 |
| $Si_3N_4$ (16) | 37,5 |
| Nb (17) | 2 |

**EXEMPLE 3**

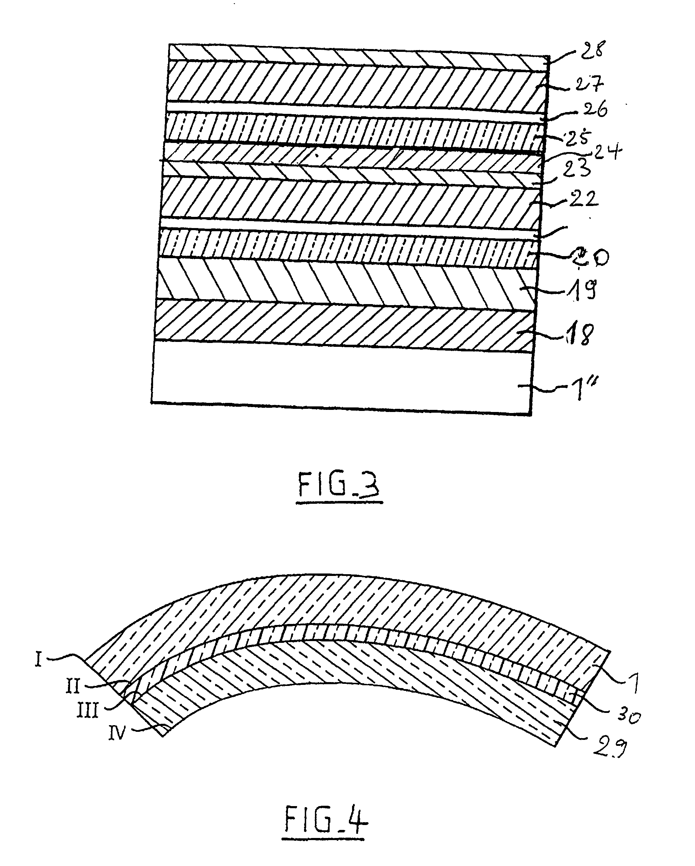

Celui-ci se rapporte à un substrat verrier 1" représenté en coupe à la figure 3, substrat identique aux substrats 1 et 1' précédents, sur lequel on a déposé un empilement à deux couches d'argent de type de ceux décrits dans le brevet EP-0 847 965, amélioré selon l'invention.

L'empilement est le suivant :

$$Verre^{(1'')}/SnO_2^{(18)}/ZnO^{(19)}/Ag^{(20)}/Ti^{(21)}/ZnO^{(22)}/$$

$$Si_3N_4^{(23)}/ZnO^{(24)}/Ag^{(25)}/Ti^{(26)}/ZnO^{(27)}/Si_3N_4^{(28)} \text{ dopé à 7\% d'Al}$$

Les couches sont déposées dans les mêmes conditions que celles relatives aux exemples 1 et 2.

La couche (28) en $Si_3N_4$ dopé à 7% d'aluminium est déposée à partir d'une cible faite d'un alliage Si/Al par pulvérisation réactive dans une atmosphère d'azote.

Le tableau 3 ci-dessous indique la nature des couches et leurs épaisseurs en nanomètres :

TABLEAU 3

| | EXEMPLE 3 |
|---|---|
| verre (1") | - |
| SnO$_2$ (18) | 17 |
| ZnO (19) | 17 |
| Ag (20) | 9 |
| Ti (21) | 1 |
| ZnO (22) | 10 |
| Si$_3$N$_4$ (23) | 55 |
| ZnO (24) | 20 |
| Ag (25) | 9 |
| Ti (26) | 1 |
| ZnO (27) | 10 |
| Si$_3$N$_4$ (28) dopé à 7% d'Al | 25 |

Chacun des trois substrats revêtus selon les exemples 1, 2 et 3 est ensuite bombé par gravité sur un moule annulaire monté sur un chariot mobile évoluant dans un four de réchauffage. Au-dessus de lui, sur le moule annulaire, on superpose un second substrat verrier 29 identique aux substrats 1, 1' et 1" mais non revêtu de couches. L'empilement de couches se trouve sur la face supérieure du substrat 1, 1' ou 1", et donc en contact avec la face inférieure du second substrat (« en contact » ne signifie pas nécessairement un contact continu, il peut y avoir de l'air emprisonné à l'interface entre les deux substrats). Une fois le bombage effectué, l'empilement des couches se trouvent donc sur la face concave du premier substrat 1, 1' ou 1". Les deux substrats superposés sont ensuite désolidarisés, puis, toujours de manière connue, assemblés par une feuille 30 de polyvinylbutyral d'environ 0,8 mm d'épaisseur pour constituer un vitrage feuilleté représenté à la figure 4 et utilisable en tant que parebrise.

Conventionnellement, on numérote les faces des substrats verriers 1 et 29 en commençant par la face destinée à être tournée vers l'extérieur, une fois montée dans le véhicule. On a donc ici l'empilement de couches en face 2, concave.

Alternativement, l'empilement dans le feuilleté peut aussi se trouver avantageusement en face 3, sur une face convexe. Dans ce cas, le bombage est fait de manière à ce que ce soit le substrat 1, 1' à couches qui soit sur le moule annulaire au-dessus du substrat 29 sans couche, avec l'empilement de couches en contact avec la face supérieure du substrat 29 sans couche.

Les substrats des exemples 1, 2 et 3 ont été étudiés avant et après bombage, puis après feuilletage.

Les conclusions sont les suivantes :

➡ après bombage, la transmission lumineuse des substrats 1 et 1' augmente, ce qui traduit l'oxydation complète de la dernière couche de protection en Nb venant « encapsuler » la couche sous-jacente en Si$_3$N$_4$,

➡ par rapport à des substrats dépourvus de cette dernière couche en Nb, la qualité optique est meilleure, il n'y a plus ou quasiment plus d'apparition de piqûres, et les performances thermiques sont également préservées,

➡ la transmission lumineuse du substrat 1' ne change pas,

➡ les vitrages feuilletés obtenus répondent à tous les critères requis pour être utilisés en tant que parebrise.

A noter que, alternativement à la couche finale de Nb, on peut aussi dans le cadre de l'invention déposer une fine couche d'étain, de zirconium, ou de titane (ou déposer directement des couches en Nb$_2$O$_5$ ou SnO$_2$, ZrO$_2$ ou TiO$_2$). Ces métaux, tout particulièrement Nb, Sn et Ti, ont en effet tous le point commun de former, en s'oxydant, un composé avec le sodium de manière à limiter sa diffusion dans les couches sous-jacentes.

**Revendications**

1. Substrat transparent (1, 1', 1") pour vitrage, du type substrat verrier, revêtu d'un empilement de couches minces comprenant au moins une couche fonctionnelle (4, 10, 14, 20, 25) à propriétés de protection solaire, bas-émissive et/ou à propriétés de conducteur électrique et dont la dernière couche (6, 16, 28) est à base d'un nitrure, carbonitrure, oxynitrure ou oxycarbonitrure de silicium, *caractérisé en ce que* ladite couche à base de nitrure, carbonitrure, oxynitrure ou oxycarbonitrure (6, 16) est surmontée d'une couche protectrice (7, 17) d'une épaisseur d'au plus 10 nm déposée sous forme d'un métal choisi parmi au moins l'un des métaux suivants : Nb, Sn, Ta, Ti, Zr ou déposée sous forme d'un oxyde métallique, éventuellement sous-stoechiométrique en oxygène, choisi parmi l'un au moins des oxydes suivants: oxyde de niobium, oxyde d'étain, oxyde de tantale, oxyde de titane, oxyde de zirconium.

2. Substrat selon la revendication 1, *caractérisé en ce qu'en* outre la couche à base de nitrure, carbonitrure, oxynitrure, oxycarbonitrure de silicium est " dopée " par introduction dans sa composition d'au moins un métal du type Al, dans une proportion allant de 3 à 25% en poids.

3. Substrat selon la revendication 1 ou 2, *caractérisé en ce que* la couche protectrice (7, 17) est déposée sous forme métallique ou sous forme d'oxyde métallique sous-stoechiométrique en oxygène, et destinée à s'oxyder totalement lors d'un traitement thermique du type bombage et/ou trempe.

4. Substrat selon la revendication 3, *caractérisé en ce que* la couche protectrice (7, 17) déposée sous forme métallique ou sous-stoechiométrique en oxygène est d'une épaisseur comprise entre 1 et 5 nm.

5. Substrat selon la revendication 1, *caractérisé en ce que* la couche (7, 17) déposée sous forme d'un oxyde métallique est d'une épaisseur comprise entre 2 et 10 nm.

6. Substrat selon l'une des revendications précédentes, *caractérisé en ce que* ladite couche fonctionnelle (4, 10, 14, 20, 25) est de type métallique, notamment à base d'argent, d'or, d'aluminium, de nickel, de chrome, d'acier inoxydable.

7. Substrat selon l'une des revendications 1 à 5, *caractérisé en ce que* ladite couche fonctionnelle (4, 10, 14, 20, 25) est de type nitrure métallique tel que TiN, CrN, NbN, ZrN.

8. Substrat selon l'une des revendications 1 à 5, *caractérisé en ce que* ladite couche fonctionnelle (4, 10, 14, 20, 25) est de type oxyde métallique dopé tel que ITO, $SnO_2$ :F, ZnO :In, ZnO :F, ZnO :Al, ZnO :Sn.

9. Substrat selon l'une des revendications 1 à 6, *caractérisé en ce qu'il* est muni d'un empilement de couches minces comprenant au moins une couche à base d'argent (4) disposée d'une part entre un revêtement diélectrique " intérieur " (2, 3) et d'autre part un revêtement diélectrique " extérieur " (6) de préférence par l'intermédiaire d'une fine couche de métal (5), ledit revêtement diélectrique extérieur comprenant la couche à base de nitrure de silicium (6).

10. Substrat selon l'une des revendications précédentes, *caractérisé en ce que* l'empilement de couches minces comprend au moins deux couches fonctionnelles, notamment deux ou trois couches à base d'argent (10, 14).

11. Substrat selon l'une des revendications précédentes, *caractérisé en ce que* l'empilement comprend une ou deux couches fonctionnelles à base d'argent, et une dernière couche à base de nitrure de silicium.

12. Substrat selon l'une des revendications précédentes, *caractérisé en ce qu'il* est bombable/trempable.

13. Application du substrat selon l'une des revendications précédentes à la fabrication de vitrages à propriétés électriques du type vitrages chauffants et/ou à propriétés thermiques du type vitrages de protection solaire, filtrants ou bas-émissifs qui soient bombables/trempables.

14. Application selon la revendication 13 à la fabrication de vitrages monolithiques ou feuilletés, notamment de vitrages destinés au bâtiment, ou à l'automobile du type vitrages latéraux ou parebrise.

**EP 0 937 013 B1**

**Patentansprüche**

1. Substrat (1 1', 1") vom glasertigem Typ transparent, für Verglasungen vorgesehen und mit einem Aufbau aus dünnen Schichten versehen ist, der mindestens eine Funktionsschicht (4, 10, 14, 20, 25) mit vor Sonne schützenden, niedrig emittierenden und/oder elektrisch leitfähigen Eigenschaften umfasst, wobei die letzte Schicht (6, 16, 28) auf Basis eines Siliciumnitrids, -carbonitrids, -nitridoxids oder -carbonitridoxids ist, **dadurch gekennzeichnet, dass** die Schicht auf Basis eines Nitrids, Carbonitrids, Nitridoxids oder Carbonitridoxids (6, 16) mit einer Schutzschicht (7, 17) mit einer Dicke von höchstens 10 nm bedeckt ist, die in Form eines aus mindestens einem der Metalle Nb, Sn, Ta, Ti und Zr ausgewählten Metalls oder in Form eines Metalloxids, das gegebenenfalls an Sauerstoff unterstöchiometrisch und aus mindestens einem der Oxide Niob-, Zinn-, Tantal-, Titan- und Zirconiumoxid ausgewählt ist, aufgebracht worden ist.

2. Substrat nach Anspruch 1, **dadurch gekennzeichnet, dass** die Schicht auf der Basis von Siliciumnitrid, -carbonitrid, -nitridoxid oder -carbonitridoxid außerdem dotiert ist, indem in ihre Zusammensetzung mindestens ein Metall vom Typ Al mit einem Anteil von 3 bis 25 Gew.-% eingeführt ist.

3. Substrat nach Anspruch 1 oder 2, **dadurch gekennzeichnet, dass** die Schutzschicht (7, 17) in Form eines Metalls oder eines an Sauerstoff unterstöchiometrischen Metalloxids aufgebracht und vorgesehen ist, bei einer Wärmebehandlung vom Typ Biegen und/oder Vorspannen vollständig aufzuoxidieren.

4. Substrat nach Anspruch 3, **dadurch gekennzeichnet, dass** die Dicke der in Form eines Metalls oder eines an Sauerstoff unterstöchiometrischen Metalloxids aufgebrachten Schutzschicht (7, 17) 1 bis 5 nm beträgt.

5. Substrat nach Anspruch 1, **dadurch gekennzeichnet, dass** die Dicke der in Form eines Metalloxids aufgebrachten Schicht (7, 17) 2 bis 10 nm beträgt.

6. Substrat nach einem der vorhergehenden Ansprüche, **dadurch gekennzeichnet, dass** die Funktionsschicht (4, 10, 14, 20, 25) metallisch und insbesondere auf der Basis von Silber, Gold, Aluminium, Nickel, Chrom oder rostfreiem Stahl ist.

7. Substrat nach einem der Ansprüche 1 bis 5, **dadurch gekennzeichnet, dass** die Funktionsschicht (4, 10, 14, 20, 25) aus einem Metallnitrid wie TiN, CrN, NbN oder ZrN besteht.

8. Substrat nach einem der Ansprüche 1 bis 5, **dadurch gekennzeichnet, dass** die Funktionsschicht (4, 10, 14, 20, 25) aus einem dotierten Metalloxid wie ITO, $SnO_2$:F, ZnO:In, ZnO:F, ZnO:Al oder ZnO : Sn besteht.

9. Substrat nach einem der Ansprüche 1 bis 6, **dadurch gekennzeichnet, dass** es mit einem Aufbau aus dünnen Schichten versehen ist, der mindestens eine Schicht auf der Basis von Silber (4) umfasst, die zwischen einer "inneren" dielektrischen Beschichtung (2, 3) und einer "äußeren" dielektrischen Beschichtung (6), vorzugsweise über eine feine Metallschicht (5), angeordnet ist, wobei die äußere dielektrische Beschichtung die Schicht auf der Basis von Siliciumnitrid (6) umfasst.

10. Substrat nach einem der vorhergehenden Ansprüche, **dadurch gekennzeichnet, dass** der Aufbau aus dünnen Schichten mindestens zwei Funktionsschichten, insbesondere zwei oder drei Schichten (10, 14) auf der Basis von Silber, umfasst.

11. Substrat nach einem der vorhergehenden Ansprüche, **dadurch gekennzeichnet, dass** der Aufbau eine oder zwei Funktionsschichten auf der Basis von Silber und eine letzte Schicht auf der Basis von Siliciumnitrid umfasst.

12. Substrat nach einem der vorhergehenden Ansprüche, **dadurch gekennzeichnet, dass** es sich biegen/vorspannen läßt.

13. Verwendung des Substrats nach einem der vorhergehenden Ansprüche zur Herstellung von Gläsern mit elektrischen Eigenschaften wie Gläsern, die beheizbar sind und/oder thermische Eigenschaften besitzen, wie filternde, niedrig emittierende oder Sonnenschutzgläser, die sich biegen/vorspannen lassen.

14. Verwendung nach Anspruch 13 zur Herstellung von monolithischen oder Verbundgläsern und insbesondere von Gläsern, die für Gebäude oder, wie Seiten- oder Frontscheiben, für Kraftfahrzeuge vorgesehen sind.

**Claims**

1. Transparent substrate (1, 1', 1") for a glazing, of the glass substrate type, covered with a stack of thin coatings comprising at least one functional coating (4, 10, 14, 20, 25) having solar protection, low emissive and/or electrical conductivity properties and whose final coating (6, 16, 28) is based on silicon nitride, carbonitride, oxynitride or oxycarbonitride, **characterized in that** said nitride, carbonitride, oxynitride or oxycarbonitride-based coating (6, 16) is surmounted by a protective coating (7, 17) with a thickness of at the most 10 nm deposited in the form of a metal chosen from among at least one of the following metals: Nb, Sn, Ta, Ti and Zr or deposited in the form of a metal oxide, optionally oxygen-substoichiometric, chosen from among at least one of the following oxides: niobium oxide, tin oxide, tantalum oxide, titanium oxide and zirconium oxide.

2. Substrate according to claim 1, **characterized in that** in addition the silicon nitride, carbonitride, oxynitride or oxycarbonitride-based coating is "doped" by the introduction into its composition of at least one metal of the Al type in a proportion ranging from 3 to 25 wt.%.

3. Substrate according to claim 1 or 2, **characterized in that** the protective coating (7, 17) is deposited in the form of a metal or in the form of a metal oxide which is oxygen-substoichiometric and which oxidizes completely during a heat treatment of the bending and/or toughening type.

4. Substrate according to claim 3, **characterized in that** the protective coating (7, 17) deposited in metal form or oxygen-substoichiometric has a thickness between 1 and 5 nm.

5. Substrate according to claim 1, **characterized in that** the coating (7, 17) deposited in metal oxide form has a thickness between 2 and 10 nm.

6. Substrate according to one of the preceding claims, **characterized in that** said functional coating (4, 10, 14, 20, 25) is of the metal type and is in particular based on silver, gold, aluminium, nickel, chromium or stainless steel.

7. Substrate according to one of the claims 1 to 5, **characterized in that** said functional coating (4, 10, 14, 20, 25) is of the metal nitride type such as TiN, CrN, NbN or ZrN.

8. Substrate according to one of the claims 1 to 5, **characterized in that** said functional coating (4, 10, 14, 20, 25) is of the doped metal oxide type such as ITO, $SnO_2$:F, ZnO:In, ZnO:F, ZnO:Al, ZnO:Sn.

9. Substrate according to one of the claims 1 to 6, **characterized in that** it is provided with a stack of thin coatings comprising at least one silver-based coating (4) positioned on the one hand between an "inner" dielectric layer (2, 3) and on the other an "outer" dielectric layer (6), preferably by means of a thin metal coating (5), said outer dielectric layer comprising the silicon nitride-based coating (6).

10. Substrate according to one of the preceding claims, **characterized in that** the stack of thin coatings comprises at least two functional coatings, more particularly two or three silver-based coatings (10, 14).

11. Substrate according to one of the preceding claims, **characterized in that** the stack comprises one or two silver-based functional coatings and a final silicon nitride-based coating.

12. Substrate according to one of the preceding claims, **characterized in that** it is bendable/toughenable.

13. Application of the substrate according to one of the preceding claims to the manufacture of glazings having electrical properties such as heated glazings and/or having thermal properties such as solar protection, filtering or low emissive glazings, which are bendable/toughenable.

14. Application according to claim 13 to the manufacture of monolithic or laminated glazings, particularly glazings intended for use in buildings, or cars such as side windows or windscreens.

FIG.1

FIG. 2

FIG.3

FIG.4